# EUROPEAN PATENT SPECIFICATION

(11) **EP 2 353 102 B1**
(45) Date of publication and mention of the grant of the patent: **30.10.2019**
(21) Application number: 09829255.0
(22) Date of filing: 02.11.2009
(51) Int. Cl.: H04L 29/08, G06F 9/451

(54) **METHOD AND APPARATUS FOR MANAGING STATE INFORMATION OF REMOTE USER INTERFACE**
VERFAHREN UND VORRICHTUNG ZUR VERWALTUNG VON ZUSTANDSINFORMATIONEN EINER FERNBENUTZERSCHNITTSTELLE
PROCÉDÉ ET APPAREIL DE GESTION D'INFORMATIONS D'ÉTAT D'UNE INTERFACE UTILISATEUR DISTANTE

(30) Priority: 03.11.2008 KR 20080108628; 24.04.2009 KR 20090036057; 09.10.2009 KR 20090096467
(43) Date of publication of application: 10.08.2011
(73) Proprietor: Samsung Electronics Co., Ltd., Suwon-si, Gyeonggi-do, 443-742 (KR)
(72) Inventor: RYU, Young-Sun, Seongnam-si Gyeonggi-do 463-738 (KR); LEE, Kook-Heui, Suwon-si Gyeonggi-do 443-738 (KR); SONG, Jae-Yeon, Seoul 135-080 (KR)
(74) Representative: HGF Limited
(86) International application number: PCT/KR2009/006386
(87) International publication number: WO 2010/062048

(56) References cited:
- KR-A- 20100 049 482
- US-A1- 2005 022 210
- US-A1- 2007 174 300
- US-A1- 2007 174 301
- US-A1- 2007 192 441
- US-A1- 2008 120 422

## Description

### Technical Field

The present invention relates generally to an apparatus and method for using Remote User Interfaces (RUIs), and more specifically, to an apparatus and method for managing state information of RUIs.

### Background Art

Intensive research to improve home network technology is being conducted by many industrial standards organizations, such as Digital Living Network Alliance (DLNA), Home Audio-Video interoperability (HAVi), and Universal Plug and Play (UPnP). In such home networks, an RUI technology may be used to enable a device to control functions of other devices. In RUI technology based on a client-server architecture, an RUI client fetches a User Interface (UI) from an RUI server and enables a user to control the RUI server through the UR in the RUI client.

Consumer Electronics Association (CEA)-2014, a standard regarding RUI, defines a protocol and a framework for RUI in a UPnP network and the Internet. According to CEA-2014, a UPnP device (or an RUI server) provides a user interface to a Consumer Electronics-HyperText Markup Language (CE-HTML) type web page, and a user may remotely control an application of the UPnP device through the web page. CE-HTML is a special version of HTML, which is based on an eXtensible HyperText Markup Language (XHTML).

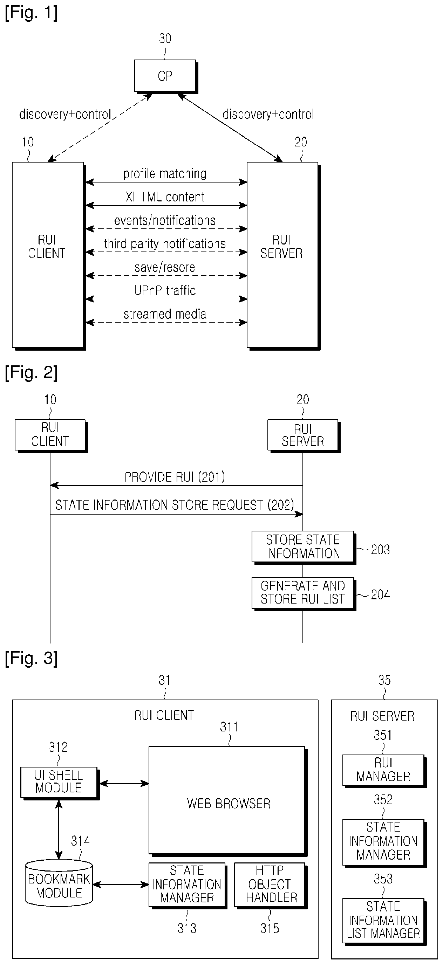

FIG. 1 illustrates a communication method between an RUI server and an RUI client based on the CEA-2014 standard. In order to use RUIs in a home network, discovery of an RUI server 20 should be performed first. CEA-2014 discovers the RUI server 20 through a UPnP discovery process because CEA-2014 is based on a UPnP network. An RUI client 10 and a UI Control Point (CP) 30 are shown in a separated manner in FIG. 1. However, when the UI CP 30 is embedded in the RUI client 10, the RUI client 10 will directly discover the RUI server 20. If the RUI client 10 has no CP 30, and a separate CP 30 intends to send a UI of the RUI server 20 to the RUI client 10, the CP 30 may discover the RUI client 10 through UPnP search.

After completing the discovery process, the RUI client 10 acquires an RUI page referring to a Uniform Resource Locator (URL) where the RUI page exists, which is included in a UPnP Device Description. More specifically, an XHTML browser of the RUI client 10 sends a request for an RUI page to a web server of the RUI server 20. Since the RUI page is configured for control of an application of the RUI server 20, the RUI client 10 controls the application of the RUI server 20 using the RUI page. The conventional communication method between the RUI server 20 and the RUI client 10 is described in detail in documents of the CEA-2104 standard, so a description thereof is omitted herein.

A process of storing and restoring state information of RUIs in the conventional UPnP network is described with reference to FIG. 2. In step 201, the RUI server 20 provides RUIs to the RUI client 10. Upon receiving a store request for state information of the presently used RUI from a user, the RUI client 10 sends a store request for the state information to the RUI server 20, in step 202. In step 203, the RUI server 20 stores the state information of the RUI that is presently provided to the RUI client 10. In step 204, the RUI server 20 generates and stores a list of the stored RUI state information.

US 2007/174301 A1 describes an apparatus and method for restoring a remote user interface (RUI) in a Universal Plug and Play (UPnP) environment. In the method, a client receiving an RUI from a server requests that the state information of the RUI be saved. The method includes obtaining state information generated when the RUI is used, and requesting that the obtained state information be saved. Accordingly, it is possible to apply a method of storing and restoring state information of a remote user interface, in a UPnP environment, to an HTTP-based remote protocol model having stateless characteristics which do not allow state information of a remote user interface to be stored.

### Disclosure of Invention

### Technical Problem

As shown in FIG. 2, all state information of RUIs is managed by the RUI server 20. Therefore, in order to use the state information stored in the RUI server 20, the RUI client 10 must access a list of RUI state information, and a discovery process between the RUI client 10 and the RUI server 20 is required for the access. Therefore, the process of storing and restoring state information of RUIs in the conventional UPnP could be applied to Remote Desktop Protocol (RDP), eXtended Remote Technology (XRT), etc., which are remote protocol models in which all state information of RUIs is stored in the RUI server, but may not be applied to a remote protocol model having a stateless feature, such as Internet-based HyperText Transfer Protocol (HTTP).

### Solution to Problem

The present invention addresses at least the above-mentioned problems and/or disadvantages and to provide at least the advantages described below. Accordingly, an aspect of the present invention provides a method and apparatus in which an RUI client can manage state information of RUIs.

Another aspect of the present invention provides a method and apparatus for migrating state information of RUIs of a first RUI client to a second RUI client different from the first RUI client.

According to one aspect of the present invention, there is provided a method, performed by a control point, CP, for managing state information of a Remote User Interface, RUI, application, wherein the state information is received by a first client from a server providing the RUI application, the method comprising: receiving, from a user, a migration request to migrate the state information of the RUI application; determining an RUI application that is currently running on the first client; commanding the first client to make a store request to store the state information of the determined RUI application in the server; accessing, by the CP, the server and checking location information indicating a route to a location where the state information is stored; and transmitting, by the CP, a restore request for requesting a second client to restore the state information, the restore request including the location information.

According to another aspect of the present invention, there is provided a method for managing state information of a Remote User Interface, RUI, application in a server of an RUI system including a plurality of clients and a control point, CP, comprising: returning the RUI application whose state information can be stored, in response to a loading request of a first client; receiving from the first client a first request to store the state information of the returned RUI application and storing the state information; receiving an access, from the CP, for checking location information indicating a route to a location where the state information is stored; receiving from a second client a second request to restore the stored state information of the RUI application, the second request including the location information; providing the stored state information corresponding to the second request to the second client; and transmitting, to the second client, the RUI application using the location information.

According to another aspect of the present invention, there is provided a control point, CP, device for managing state information of a Remote User Interface, RUI, application, wherein the device is configured to receive a migration request to migrate the state information of the RUI application from a user, to determine an RUI application that is currently running on a first client, to command the first client to make a store request to store the state information of the determined RUI application in a server providing the RUI application, to access the server and check location information indicating a route to a location where the state information is stored, and to send a restore request including the location information for requesting a second client to restore the state information.

### Advantageous Effects of Invention

As is apparent from the foregoing description, exemplary embodiments of the present invention have the following effects.

First, as RUI state information is stored in the bookmark module prepared in the RUI client, the RUI state information can be stored and restored in an internet-based iBox model.

Second, as RUI state information is stored in RUI clients, the RUI state information can be migrated between different RUI clients.

Third, if multiple RUI clients exist in the home network, a user can freely migrate an RUI among different devices simply by selecting a migration function of RUI state information without a separate process.

Fourth, migration is possible not only by the Push scheme in which a device in operation migrates RUI state information to another device, but also by the Pull scheme in which a device desiring to receive RUI state information migrates a UI by detecting migrable UIR state information.

Fifth, various additional effects can be provided to users by providing state information of an RUI that is presently running in the RUI client

### Brief Description of Drawings

The above and other aspects, features and advantages of certain exemplary embodiments of the present invention will be more apparent from the following description taken in conjunction with the accompanying drawings, in which:
FIG. 1 is a diagram illustrating a communication method between an RUI server and an RUI client based on the CEA-2014 standard;
FIG. 2 is a diagram illustrating a process of storing and restoring state information of RUIs in the conventional UPnP network;
FIG. 3 is a block diagram illustrating architecture of an RUI system according to an embodiment of the present invention;
FIG. 4 is a diagram illustrating a bookmark list stored in a bookmark module of an RUI client according to an embodiment of the present invention;
FIG. 5 is a flow diagram illustrating an operation process of an RUI state information management method according to an embodiment of the present invention;
FIG. 6 is a block diagram illustrating architecture of an RUI system according to an embodiment of the present invention;
FIG. 7 is a diagram illustrating an operation in a Push mode of an RUI system according to an embodiment of the present invention;
FIG. 8 is a diagram illustrating an operation in a Pull mode of an RUI system according to an embodiment of the present invention;
FIG. 9 is a flow diagram illustrating an operation process of a state information management method according to an embodiment of the present invention; and
FIG. 10 is a flow diagram illustrating an operation process of a state information management method according to an embodiment of the present invention.

Throughout the drawings, the same drawing reference numerals will be understood to refer to the same elements, features and structures.

### Best Mode for Carrying out the Invention

The terms and words used in the following description and claims are not limited to bibliographical meanings, but are merely used to enable a clear and consistent understanding of the invention. Accordingly, it should be apparent to those skilled in the art that the following description of embodiments of the present invention are provided for illustrative purposes, and not for the purpose of limiting the invention, as defined by the appended claims.

In a Remote User Interface (RUI) service to which the present invention is applied, an RUI server provides RUIs, and an RUI client can control remote devices through the provided RUIs. The present invention provides a method and apparatus in which an RUI client manages state information of provided RUIs in the RUI service.

An RUI state information management method according to an embodiment of the present invention provides a method and apparatus in which an RUI client receives RUI state information provided from an RUI server, and stores and manages an RUI state information list in a bookmark module prepared in the RUI client.

The state information may include at least one of a value that is input to a web form, audio state information, video state information, cookie information, a user IDentifier (ID), and a password.

Referring to FIG. 3, an RUI system according to an embodiment of the present invention includes an RUI client 31 and an RUI server 35.

The RUI client 31 includes a web browser module 311 for rendering RUIs provided from the RUI server 35, a UI shell module 312 for providing RUIs to a user and handling an input from the user, a state information manager 313 for managing state information, a bookmark module 314 for storing a state information list along with a list of RUIs preferred by the user, and an HTTP object handler 315.

RUIs provided from the RUI server 35 may be composed in an Extensible Hypertext Markup Language (XHTML) format, and the web browser module 311 renders the provided RUIs in the XHTML format and displays the provided RUIs on a display (not shown) of the RUI client 31.

The UI shell module 312 is a module for providing a list of RUIs to the user and handling an input from the user. For example, the UI shell module 312 displays a list of RUIs available in the system for the user and causes the user to select any one RUI included in the available RUI list. Alternatively, the UI shell module 312 reads an RUI state information list stored in the bookmark module 314, displays the RUI state information list for the user, and causes the user to select any state information included in the RUI state information list.

The state information manager 313 is a module for managing storage of state information requested by the user. Upon receipt of a store request for state information from the user, the state information manager 313 generates current state information for the RUI that is presently provided through the web browser module 311, and sends a store request for the generated state information to the RUI server 35. The state information manager 313 receives location information, such as a Uniform Resource Locator (URL), which indicates a route to a location where the state information is stored, from the RUI server 35, and stores the received location information in the bookmark module 314.

If any one in the RUI state information list stored in the bookmark module 314 is selected through the UI shell module 312, then the state information manager 313 provides a URL of the selected state information to the RUI server 35, thereby requesting restoration of the state information.

The bookmark module 314, connected to the UI shell module 312 and the state information manager 313, acquires URLs of RUI state information from the RUI server 35 through interaction with the state information manager 313, and stores the acquired URLs as a state information list. The bookmark module 314 provides the state information list to the UI shell module 312 through interaction with the UI shell module 312, and provides state information selected through the UI shell module 312 to the state information manager 313, so that the selected state information may be restored.

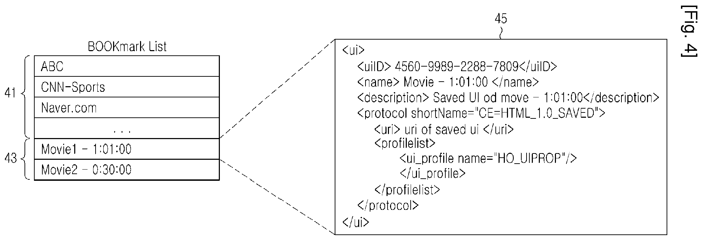

For example, the bookmark module 314 may store a bookmark such as the list illustrated in FIG. 4. The bookmark list stored in the bookmark module 314 may include a list 41 of RUIs preferred by the user and a state information list 43. The state information list 43 may be stored in a script 45 in an XML format. For example, the RUI list 41 may include RUIs preferred by the user, such as RUIs corresponding to the American Broadcasting Corporation (ABC), Cable News Network (CNN®)-Sports, and Naver.com, while the state information list 43 may include state information, such as state information of Movie 1 and station information of Movie 2.

Meanwhile, the RUI server 35 includes an RUI manager 351, a state information manager 352 for storing and managing the state information store-requested by the RUI client 31, and a state information list manager 353 for managing a list of the state information using a route to a location where the state information is stored.

The RUI manager 351 is a module for storing and managing RUIs that the RUI server 35 provides to the RUI client 31. For example, the RUI manager 351 can be a web server consisting of a software module for providing RUI pages. Each of the RUI pages being provided to the RUI client 31 can be identified by a Universally Unique Identifier (UUID). The RUI page is composed of XHTML content, which includes a plug-in object for managing state information of RUIs. Accordingly, the RUI client 31 includes the HTTP object handler 315, which may analyze and handle the plug-in object. For example, Table 1 below describes an object with which the HTTP object handler 315 handles storage and management of the state information.

### Table 1

### [Table 1]

**[Table]**

| Property | |
|---|---|
| setURL() | It appoints a location where state information of RUI is to be stored. |
| isRestoring(): Boolean | It notifies whether restoring is in progress or not. |
| saveStates(): Number | An API that stores state information of RUI in the RUI server through HTTP POST. |
| getUIStateURL(): String | An API that gets from the RUI server a location where state information of RUI is stored. |
| addBookmark(): Boolean | An API that stores in the bookmark module a location where state information of RUI received from the RUI server is stored. |

The state information manager 352 is a module for storing and managing, in a database, the state information store-requested by the RUI client 31. Upon receiving a store request for the state information from the RUI client 31, the state information manager 352 stores the state information in the database. Upon receiving a restore request for the state information from the RUI client 31, the state information manager 352 extracts the restore-requested state information from the database and provides the extracted state information.

The state information list manager 353 manages a route, such as aURL, of a location where the state information is stored. For example, if state information is stored upon request of the RUI client 31, the state information list manager 353 adds a URL indicating where the state information is stored to the state information list, and provides the added URL to the RUI client 31. Upon receipt of a restore request for state information corresponding to the URL from the RUI client 31, the state information list manager 353 provides a restore request for state information to the state information manager 313 along with the URL.

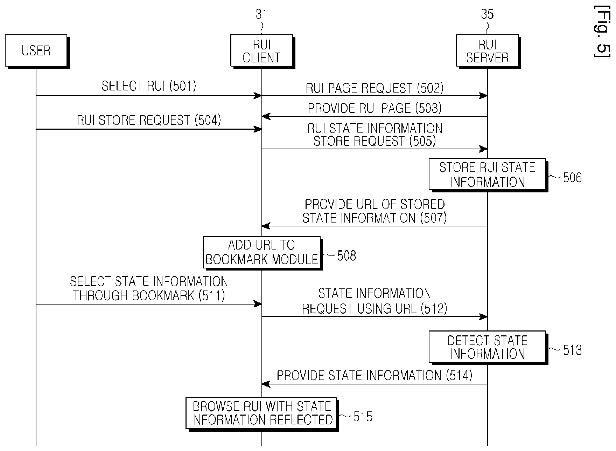

FIG. 5 illustrates an operation process of an RUI state information management method according to an embodiment of the present invention. In the following description with reference to FIG. 5, it is assumed that the RUI client 31 provides a list of at least one RUI page provided from the RUI server 35 through the UI shell module 312. Further, a description of the process of receiving an RUI list from the RUI server 35 in the RUI client 31 is omitted.

In step 501, a user inputs a request for an RUI page using the UI shell module 312 prepared in the RUI client 31. In response to the request, the RUI client 31 sends a request for the RUI page to the UI server 35 in step 502.

Upon receiving the RUI page request from the RUI client 31, the RUI server 35 transmits an RUI page composed by the web server 351 to the RUI client 31, which provides the RUI page to the user through the web browser module 311, in step 503.

In step 504, as the user who uses the RUI page provided through the RUI client 31, inputs a store request for state information of the currently used RUI page, the UI shell module 312 provides the input from the user to the state information manager 313. In response to the request, the state information manager 313 checks state information of the current RUI page and makes a store request for the state information by providing the checked state information to the RUI server 35 in step 505.

Upon receipt of the store request for the state information from the RUI client 31, the RUI server 35 stores in step 506 the state information in a database through the state information manager 352 and provides location information, such as a URL, which indicates a route to a location where the state information is stored, to the state information list manager 353. Then, the state information list manager 353 adds the URL of the state information to the state information list and transmits the added URL to the RUI client 31 in step 507.

As the RUI server 35 transmits the added URL, the RUI client 31 receives the URL. In step 508, the state information manager 313 in the RUI client provides the received URL to the bookmark module 314, and the bookmark module 314 adds the state information to a bookmark list using the URL.

When the user desires to use the state information stored in the RUI client 31, the user checks the bookmark list stored in the bookmark module 314 through the UI shell module 312.

If information for selecting state information included in the bookmark list is received from the user through the UI shell module 312 in step 511, the bookmark module 314 provides a URL of the received state information to the state information manager 313, and the state information manager 313 provides the URL to the RUI server 35 and sends a request for state information corresponding to the URL to the RUI server 35 in step 512.

As the RUI server 35 receives the URL and the request for state information corresponding to the URL, the state information manager 352, which is located within the RUI server 35, detects state information stored in the URL in step 513. In step 514, the RUI manager 351 provides the detected state information to the RUI client 31 along with the RUI page. Then the RUI client 31 browses an RUI in which the state information is reflected, in step 515.

Meanwhile, in the RUI state information management method according to an embodiment of the present invention, as the RUI client manages the RUI state information list from the RUI server, it is also possible for a first RUI client to migrate the RUI state information to a second RUI client. Therefore, an RUI state information management method according to a second embodiment of the present invention provides a method and apparatus for migrating RUI state information from the first RUI client to the second RUI client.

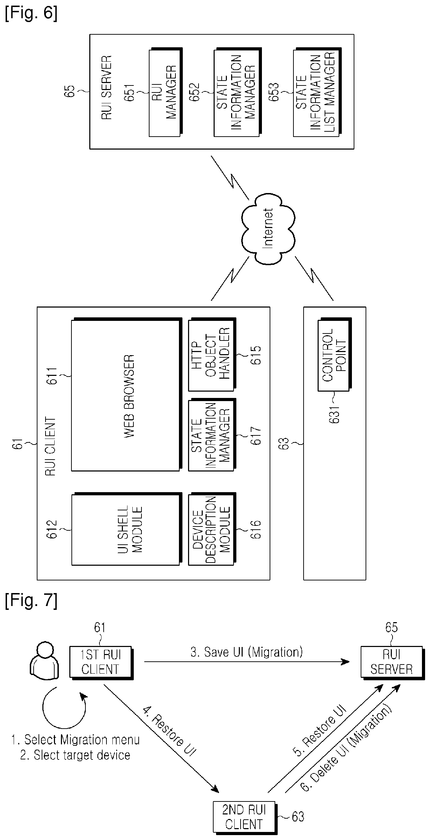

Referring to FIG. 6, an RUI system according to another embodiment of the present invention includes a first RUI client 61, a second RUI client 63, and an RUI server 65.

The first RUI client 61, like the RUI client 31 illustrated in FIG. 3, includes a web browser module 611, a UI shell module 612, and an HTTP object handler 615. Functions and operations of the web browser module 611, the UI shell module 612, and the HTTP object handler 615 are equal to the respective functions and operations of the web browser module 311, the UI shell module 312, and the HTTP object handler 315 provided in the RUI client 31.

The first RUI client 61 includes a device description module 616 for storing a list of the currently running applications, and a state information manager 617 for managing storage and migration of state information. The state information manager 617 is a module for managing storage of state information requested by the user. Upon receipt of a migration request for state information from the user, the state information manager 617 generates the current state information for an RUI or an application that is presently provided through the web browser module 611, and sends a store request for the generated state information to the RUI server 65. The state information manager 617 receives the state information and the RUI or application from the RUI server 65, and provides the received state information and RUI or application.

The second RUI client 63 includes a Control Point (CP) 631. The CP 631 discovers the first RUI client 61 and the RUI server 65, and provides a list of the searched first RUI client 61 and RUI server 65. In particular, the CP 631 provides a list of RUIs to be migrated, to the user, and handles migration of state information of the RUI included in the provided list.

The RUI server 65 includes an RUI manager 651, a state information manager 652 for storing and managing the state information store-requested by the first RUI client 61, and a state information list manager 653 for managing a list of the state information using a route to a location where the state information is stored.

The RUI server 65 is equal in structure to the RUI server 35. However, the state information list manager 653 can manage the state information list using a Universally Unique Identifier (UUID) of an RUI page. That is, upon receipt of the state information migration request from the CP 631, the state information list manager 653 in the RUI server 65 stores the UUID along with a URL in the state information list.

The RUI server 65, unlike the RUI server 35, receives a migration request for the state information from the second RUI client 63 (or the first RUI client 61). At this point, the RUI server 65 receives a URL indicating where state information to be migrated is stored, and based on the received URL, the state information list manager 653 makes an instruction to transmit the state information stored in the URL to the second RUI client 63 (or the first RUI client 61).

Although the state information list manager 653 receives the URL from the second RUI client 63 and based on the received URL, requests state information corresponding to the URL in the embodiment of the present invention described with reference to FIG. 6, the present invention is not limited to this embodiment. For example, as an alternative to this example, when receiving a migration request for the state information, the state information list manager 653 may receive a UUID from the second RUI client 63, extract a URL matched to the UUID, and generate an instruction to transmit state information stored in the extracted URL to the second RUI client 63 (or the first RUI client 61).

While the CP 631 is provided in the second RUI client 63 as an example, the present invention is not limited to this example. The CP 631 may be provided as a separate device, or provided in the first RUI client 61.

The RUI system described with reference to FIG. 6 may be embodied in a Push mode or a Pull mode according to the place where the CP 631 is provided. An operation in the Push mode and the Pull mode of the RUI system according to the embodiment of the present invention described with reference to FIG. 6 will now be described in detail.

FIG. 7 illustrates an operation in the Push mode of the RUI system according to anembodiment of the present invention described with reference to the RUI system illustrated in FIG. 6. Referring to FIG. 7, the RUI system includes the first RUI client 61, the second RUI client 63, and the RUI server 65, and the CP 631 is provided in the first RUI client 61.

While the first RUI client 61 receives an RUI page identified by a UUID and provides the RUI page to the user, the first RUI client 61 may allow the user to input a migration request for state information of the currently used RUI page or application through the CP 631 provided in the first RUI client 61.

The CP 631 discovers a client to which state information can be migrated, provides the discovered client to the user, and allows the user to select the second RUI client 63, a target to which the state information is to be migrated.

In response to the migration request, the CP 631 stores a UUID of the currently used RUI page or application. Further, the first RUI client 61 provides the state information to the RUI server 65 and makes a store request to migrate the state information. In response to the store request, the RUI server 65 stores the state information in a database, generates a route, such as a URL, to a location where the state information is stored, and adds the URL to a state information list. A UUID of the state information is stored together in the state information list.

Meanwhile, the CP 631 in the first RUI client 61 accesses the RUI server 65, and checks a URL matched to the UUID using the state information list. The CP 631 provides the URL to the second RUI client 63, which is selected by the user and to which the state information is to be migrated, and sends a restore request for the state information corresponding to the URL to the second RUI client 63.

The second RUI client 63 sends a request for state information corresponding to the URL to the RUI server 65, receives the state information and an application or an RUI page corresponding thereto from the RUI server 65, and displays the .

Upon receiving a request to delete the state information stored in the URL from the CP 631, the second RUI client 63 sends a delete request for the state information stored in the URL to the RUI server 65.

According to an embodiment of the present invention as described above with reference to FIG. 7, the CP 631 accesses the RUI server 65, checks a URL matched to the UUID, and migrates the state information using the checked URL. As an alternative to this embodiment, however, the CP 631 may provide the UUID to the second RUI client 63 when making a migration request for the state information, without performing an operation of accessing the RUI server 65 and checking the URL matched to the UUID, and the second RUI client 63 may make a request for state information matched to the UUID.

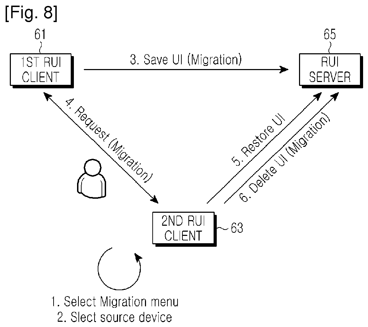

FIG. 8 illustrates an operation in the Pull mode of the RUI system according to anembodiment of the present invention described with reference to the RUI system illustrated in FIG. 6. Referring to FIG. 8, the RUI system includes the first RUI client 61, the second RUI client 63, and the RUI server 65, and the CP 631 is provided in the second RUI client 61.

The user inputs a migration request for state information of the currently used RUI page or application through the CP 631 provided in the second RUI client 63.

The CP 631 checks and provides a client to which the state information can be migrated, and further checks and provides the application or RUI page that is presently running in the first RUI client 63. The CP 631 allows the user to select the first RUI client 61 to which the state information is to be migrated.

In reply to the user's selection, the CP 631 checks and stores a UUID of the currently running application or RUI page, and sends a migration request for the state information of the currently running application or RUI page to the first RUI client 61.

In response to the migration request from the CP 631, the first RUI client 61 provides the state information of the currently running application or RUI page to the RUI server 65, and makes a store request to migrate the state information. In response to the store request, the RUI server 65 stores the state information in a database, generates a route, such as a URL, to a location where the state information is stored, and adds the URL to a state information list. A UUID of the presently running application or RUI page is stored together in the state information list.

Meanwhile, the CP 631 in the second RUI client 63 accesses the RUI server 65 and checks a URL matched to the UUID to restore the state information. The CP 631 sends a restore request for state information stored in the URL to the RUI server 65. In response to the restore request, the RUI server 65 provides the state information stored in the URL and an application or RUI page corresponding to the state information to the second RUI client 63, and the second RUI client 63 reflects the state information in the application or RUI page and displays the state information.

Next, the CP 631 in the second RUI client 63 sends a request to delete the state information stored in the URL to the RUI server 65, and the RUI server 65 deletes the state information in response to the delete request.

While, as in the Push mode, the CP 631 accesses the RUI server 65 and checks the URL matched to the UUID even in the Pull mode, the CP 631 may send in an alternative manner a migration request for state information using the UUID, without performing the operation of accessing the RUI server 65 and checking the URL matched to the UUID.

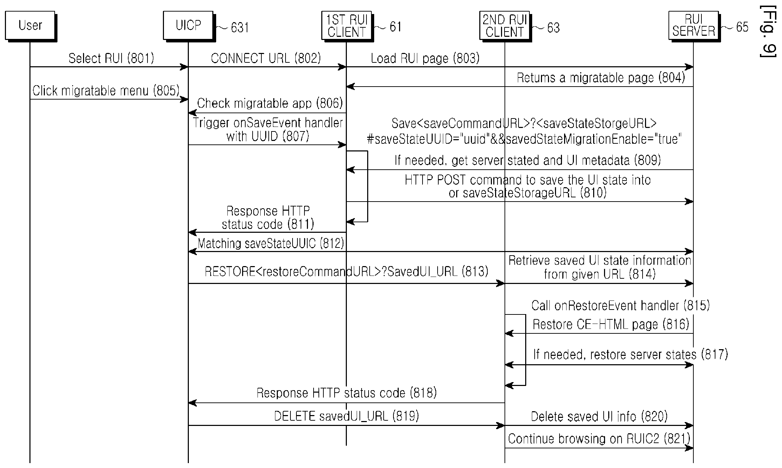

FIG. 9 illustrates an operation process of a state information management method according to an embodiment of the present invention described with reference to the RUI system illustrated in FIG. 6.

In step 801, the user selects an RUI provided by the CP 631, and makes a request for an RUI page corresponding thereto.

In step 802, the CP 631 is connected to the first RUI client 61. In step 803, the first RUI client 61 sends a request for an RUI page identified by a UUID to the RUI server 65.

As the first RUI client 61 makes the request for an RUI page, the RUI server 65 receives the RUI page request, and transmits the RUI page composed by the web server 651 to the first RUI client 61 in step 804. In response, the first RUI client 61 receives the RUI page and provides the RUI page to the user through the web browser module 611.

In step 805, the user who uses the RUI page provided through the first RUI client 61, inputs a migration request for state information of the presently used RUI page or application through the CP 631.

In response to the migration request for state information, the CP 631 accesses the device description module 616 in the first RUI client 61 and checks the presently running application or RUI page in step 806 to thereby determine whether there is any application or RUI page that can be migrated. In steps 807 to 810, the CP 631 checks the UUID of the presently running application or RUI page, and stores state information of the application or RUI page selected by the user in the RUI server 65 using a state information storage mechanism. The RUI server 65 generates a state information list including location information, such as a URL, which indicates a route to a location where the state information is stored. The RUI server 65 stores the UUID together in the state information list.

In step 811, the CP 631 determines the completed storage of the state information. In step 812, the CP 631 accesses the RUI server 65 and checks a URL matched to the UUID in the state information list.

In step 813, the CP 631 provides the URL to the second client 63 to which the state information is to be migrated, and makes a restore request for the state information corresponding to the URL.

In step 814, the second RUI client 63 sends a request for state information stored in the URL to the RUI server 65. In step 815 to 817, the second RUI client 63 receives the state information stored in the URL and an application or RUI page corresponding thereto from the RUI server 65, and displays the state information along with the application or the corresponding RUI page.

In step 818, the second RUI client 63 provides the handling results of the state information to the CP 631. If the migration of the state information is successful, the CP 631 sends a delete request for state information stored in the URL to the second RUI client 63 in step 819, and the second RUI client 63 sends a delete request for the state information stored in the URL to the RUI server 65 in step 820. In step 821, the second RUI client 63 browses the application or RUI page provided from the RUI server 65.

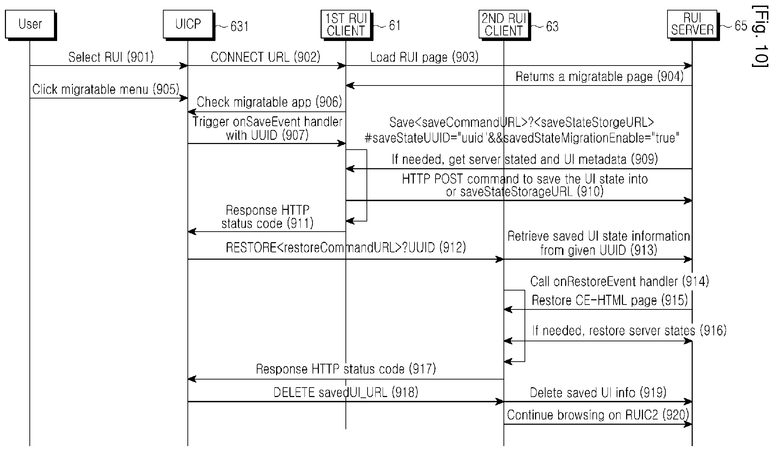

FIG. 10 illustrates an operation process of a state information management method according to an embodiment of the present invention. The state information management method according to the embodiment of the present invention described with reference to FIG. 10 is similar to the state information management method according to the embodiment described with reference to FIG. 9. Compared with the state information management method according to the embodiment described with reference to FIG. 9, in which the CP 631 migrates the state information using the URL in the state information list stored in the RUI server 65, the state information management method according to the embodiment described with reference to FIG. 10 enables the CP 631 to migrate the state information using a UUID.

Accordingly, steps 901 to 911 of the state information management method according to FIG. 10 are the same as steps 801 to 811 of the state information management method according to FIG. 9.

In step 912 of the third embodiment, the CP 631 provides the UUID of the presently running application or RUI page to the second RUI client 63 to which the state information is to be migrated, without the process of acquiring the URL from the RUI server 65, and generates a restore request for state information corresponding to the UUID.

In step 913, the second RUI client 63 sends a request for state information corresponding to the UUID to the RUI server 65. In steps 914 to 916, the second RUI client 63 receives the state information corresponding to the UUID and an application or RUI page corresponding to the state information from the RUI server 65, and displays them. The RUI server 65 receives the UUID from the second RUI client 63, checks the state information list, and then checks a URL matched to the UUID. The RUI server 65 checks state information stored in the URL and provides the state information to the second RUI client 63.

In step 917, the second RUI client 63 provides the handling results of the state information to the CP 631. If the migration of the state information is successful, the CP 631 sends a request to delete state information corresponding to the UUID to the second RUI client 63 in step 918, and the second RUI client 63 sends a delete request for the state information corresponding to the URL to the RUI server 65 in step 919. In step 920, the second RUI client 63 browses the application or RUI page provided from the RUI server 65.

The RUI state information management method according to embodiments of the present invention can also be embodied as computer-readable codes on a computer-readable medium. A computer-readable medium is any data storage device that can store data, which can thereafter be read by a computer system. Examples of computer-readable mediums include, but are not limited to, computer-readable recording mediums such as Read-Only Memory (ROM), Random-Access Memory (RAM), CD-ROMs, magnetic tapes, floppy disks, and optical data storage devices. Computer-readable mediums also include carrier waves (such as data transmission through the Internet via wired or wireless transmission paths). The computer-readable medium can also be distributed over network-coupled computer systems so that the computer-readable code is stored and executed in a distributed fashion. Also, function programs, codes, and code segments for accomplishing the present invention can be easily construed as within the scope of the invention by programmers skilled in the art to which the present invention pertains.

While the present invention has been shown and described with reference to certain embodiments thereof, it will be understood by those skilled in the art that various changes in form and details may be made therein without departing from the scope of the present invention as defined by the appended claims.

## Claims

1. A method, performed by a control point, CP, (631) for managing state information of a Remote User Interface, RUI, application, wherein the state information is received by a first client (61) from a server (65) providing the RUI application, the method comprising:
receiving (805), from a user, a migration request to migrate the state information of the RUI application;
determining (806) an RUI application that is currently running on the first client (61);
commanding (807) the first client (61) to make a store request (810) to store the state information of the determined RUI application in the server (65);
accessing, by the CP (631), the server (65) and checking location information indicating a route to a location where the state information is stored; and
transmitting (813), by the CP (631), a restore request for requesting a second client (63) to restore the state information, the restore request including the location information.

2. The method of claim 1, further comprising sending (819) a request to delete the state information on the server (65) to the second client (63) after restoring (816) the state information by the second client (63).

3. The method of claim 1, wherein receiving (805) the migration request further comprises:
discovering, by the CP (631), at least one client (63) to which the state information may be migrated;
providing the at least one client (63) to the user; and
receiving a user selection of any one of the discovered at least one client (63).

4. The method of claim 1, wherein the CP (631) provides a unique identifier for the state information stored on the server (65).

5. The method of claim 1, wherein at least one of the first client (61) and the second client (63) comprises the CP (631).

6. The method of claim 1, wherein the CP (631) is provided as a separate device.

7. The method of claim 4, wherein the location information comprises a URL matched to the unique identifier in a list of the state information.

8. A method for managing state information of a Remote User Interface, RUI, application in a server (65) of an RUI system including a plurality of clients (61, 63) and a control point, CP, (631) comprising:
returning (804) the RUI application whose state information can be stored, in response to a loading request (803) of a first client (61);
receiving (810) from the first client (61) a first request to store the state information of the returned RUI application and storing the state information;
receiving an access, from the CP (631), for checking location information indicating a route to a location where the state information is stored;
receiving (814) from a second client (63) a second request to restore the stored state information of the RUI application, the second request including the location information;
providing (816) the stored state information corresponding to the second request to the second client (63); and
transmitting, to the second client (63), the RUI application using the location information.

9. The method of claim 8, further comprising receiving (820) a request to delete the state information from the CP (631).

10. The method of claim 8, further comprising receiving a request for a migration of the state information including location information indicating where the state information is stored.

11. A control point, CP, device (631) for managing state information of a Remote User Interface, RUI, application,
wherein the device (631) is configured to receive (805) a migration request to migrate the state information of the RUI application from a user, to determine (806) an RUI application that is currently running on a first client (61), to command (807) the first client (61) to make a store request to store the state information of the determined RUI application in a server (65) providing the RUI application, to access the server (65) and check location information indicating a route to a location where the state information is stored, and to send (813) a restore request including the location information for requesting a second client (63) to restore the state information.

12. The CP device of claim 11, wherein the CP device (631) is configured to perform any one method of claims 2 to 7.

## Patentansprüche

1. Verfahren, das durch einen Kontrollpunkt, CP, (631) ausgeführt wird, zur Verwaltung von Zustandsinformationen einer Remote User Interface, RUI, Applikation, wobei die Zustandsinformationen von einem Server (65), der die RUI-Applikation bereitstellt, durch einen ersten Client (61) empfangen werden, wobei das Verfahren folgendes umfasst:
Empfangen (805) einer Migrationsanforderung zur Migration der Zustandsinformationen der RUI-Applikation von einem Benutzer;
Bestimmen (806) einer RUI-Applikation, die gegenwärtig auf dem ersten Client (61) ausgeführt wird;
Anweisen (807) des ersten Clients (61), eine Speicheranforderung (810) zum Speichern der Zustandsinformationen der bestimmten RUI-Applikation in dem Server (65) auszuführen;
Zugriff durch den CP (631) auf den Server (65) und Überprüfen von Standortinformationen, die eine Route zu einem Standort anzeigen, an dem die Zustandsinformationen gespeichert werden; und
Übermitteln (813) einer Wiederherstellungsanforderung durch den CP (631) zur Anforderung an einen zweiten Client (63), die Zustandsinformationen wiederherzustellen, wobei die Wiederherstellungsanforderung die Standortinformationen enthält.

2. Verfahren nach Anspruch 1, ferner umfassend das Senden (819) einer Anforderung zum Löschen der Zustandsinformationen auf dem Server (65) an den zweiten Client (63) nach Wiederherstellung (816) der Zustandsinformationen durch den zweiten Client (63).

3. Verfahren nach Anspruch 1, wobei das Empfangen (805) der Migrationsanforderung ferner folgendes umfasst:
Ermitteln mindestens eines Clients (63) durch den CP (631), zu dem die Zustandsinformationen migriert werden können;
Bereitstellen des mindestens einen Clients (63) an den Benutzer; und
Empfangen einer Benutzerauswahl eines beliebigen ermittelten Clients des mindestens einen Clients (63).

4. Verfahren nach Anspruch 1, wobei der CP (631) einen eindeutigen Bezeichner für die auf dem Server (65) gespeicherten Zustandsinformationen bereitstellt.

5. Verfahren nach Anspruch 1, wobei mindestens ein Client des ersten Clients (61) und des zweiten Clients (63) den CP (631) umfasst.

6. Verfahren nach Anspruch 1, wobei der CP (631) als eine separate Vorrichtung bereitgestellt ist.

7. Verfahren nach Anspruch 4, wobei die Standortinformationen einen URL umfassen, der mit dem eindeutigen Bezeichner in einer Liste der Zustandsinformationen zusammenpasst.

8. Verfahren zur Verwaltung von Zustandsinformationen einer Remote User Interface, RUI, Applikation in einem Server (65) eines RUI-Systems, das mehrere Clients (61, 63) und einen Kontrollpunkt, CP, (631) aufweist, umfassend:
Rückmeldung (804) der RUI-Applikation, deren Zustandsinformationen gespeichert werden können, als Reaktion auf eine Ladeanforderung (803) eines ersten Clients (61);
Empfangen (810) einer ersten Anforderung zum Speichern der Zustandsinformationen der rückgemeldeten RUI-Applikation von dem ersten Client (61) und Speichern der Zustandsinformationen;
Empfangen eines Zugriffs von dem CP (631) zur Überprüfung der Standortinformationen, die eine Route zu einem Standort anzeigen, an dem die Zustandsinformationen gespeichert werden;
Empfangen (814) einer zweiten Anforderung zur Wiederherstellung der gespeicherten Standortinformationen der RUI-Applikation von einem zweiten Client (63), wobei die zweite Anforderung die Standortinformationen enthält;
Bereitstellen (816) der gespeicherten Standortinformationen, die der zweiten Anforderung entsprechen, an den zweiten Client (63); und
Übermitteln der RUI-Applikation unter Verwendung der Standortinformationen an den zweiten Client (63).

9. Verfahren nach Anspruch 8, ferner umfassend das Empfangen (820) einer Anforderung zum Löschen der Zustandsinformationen von dem CP (631).

10. Verfahren nach Anspruch 8, ferner umfassend das Empfangen einer Anforderung für eine Migration der Zustandsinformationen, die Standortinformationen enthalten, die anzeigen, wo die Standortinformationen gespeichert werden.

11. Kontrollpunkt-Vorrichtung, CP-Vorrichtung, (631) zur Verwaltung von Zustandsinformationen einer Remote User Interface, RUI, Applikation,
wobei die Vorrichtung (631) gestaltet ist zum Empfangen (805) einer Migrationsanforderung zur Migration der Zustandsinformationen der RUI-Applikation von einem Benutzer, zum Bestimmen (806) einer RUI-Applikation, die die gegenwärtig auf einem ersten Client (61) ausgeführt wird, zum Anweisen (807) des ersten Clients (61), eine Speicheranforderung zum Speichern der Zustandsinformationen der bestimmten RUI-Applikation in dem Server (65) auszuführen, der die RUI-Applikation bereitstellt, Zugriff auf den Server (65) und Überprüfen von Standortinformationen, die eine Route zu einem Standort anzeigen, an dem die Zustandsinformationen gespeichert werden, und Senden (813) einer Wiederherstellungsanforderung, welche die Zustandsinformationen enthält, um einen zweiten Client (63) aufzufordern, die Zustandsinformationen wiederherzustellen.

12. CP-Vorrichtung nach Anspruch 11, wobei die CP-Vorrichtung (631) für die Ausführung eines Verfahrens nach einem der Ansprüche 2 bis 7 gestaltet ist.

## Revendications

1. Procédé, exécuté par un point de commande, CP, (631) pour gérer des informations d'état d'une application d'interface utilisateur distante (RUI), les informations d'état étant reçues par un premier client (61) depuis un serveur (65) fournissant l'application RUI, le procédé comprenant les étapes suivantes :
réception (805), en provenance d'un utilisateur, d'une demande de migration pour migrer les informations d'état de l'application RUI ;
détermination (806) d'une application RUI qui est en cours d'exécution sur le premier client (61) ;
commande (807) au premier client (61) d'effectuer une demande de stockage (810) pour stocker les informations d'état de l'application RUI déterminée dans le serveur (65) ;
accès, par le CP (631), au serveur (65) et vérification des informations de localisation indiquant un chemin vers un emplacement où les informations d'état sont stockées ; et
transmission (813), par le CP (631), d'une demande de restauration pour demander à un second client (63) de restaurer les informations d'état, la demande de restauration incluant les informations de localisation.

2. Procédé selon la revendication 1, comprenant en outre l'étape d'envoi (819) d'une demande de suppression des informations d'état sur le serveur (65) au second client (63) après restauration (816) des informations d'état par le second client (63).

3. Procédé selon la revendication 1, la réception (805) de la demande de migration comprenant en outre les étapes suivantes :
découverte, par le CP (631), d'au moins un client (63) vers lequel les informations d'état peuvent être migrées ;
fourniture de l'au moins un client (63) à l'utilisateur ; et
réception d'une sélection d'utilisateur de l'un quelconque de l'au moins un client (63) découvert.

4. Procédé selon la revendication 1, le CP (631) fournissant un identifiant unique pour les informations d'état stockées sur le serveur (65).

5. Procédé selon la revendication 1, le premier client (61) et/ou le second client (63) comprenant le CP (631).

6. Procédé selon la revendication 1, le CP (631) étant fourni comme dispositif séparé.

7. Procédé selon la revendication 4, les informations de localisation comprenant une URL correspondant à l'identifiant unique dans une liste des informations d'état.

8. Procédé de gestion d'informations d'état d'une application d'interface utilisateur distante (RUI) dans un serveur (65) d'un système RUI comprenant une pluralité de clients (61, 63) et un point de commande, CP, (631) comprenant les étapes suivantes :
renvoi (804) de l'application RUI dont les informations d'état peuvent être stockées, en réponse à une demande de chargement (803) d'un premier client (61) ;
réception (810) en provenance du premier client (61) d'une première demande de stockage des informations d'état de l'application RUI renvoyée et stocker les informations d'état ;
réception d'un accès, en provenance du CP (631), pour vérifier les informations de localisation indiquant un chemin vers un emplacement où les informations d'état sont stockées ;
réception (814) en provenance d'un second client (63) d'une seconde demande de restauration des informations d'état stockées de l'application RUI, la seconde demande incluant les informations de localisation ;
fourniture (816) des informations d'état stockées correspondant à la seconde demande au second client (63) ; et
transmission, au second client (63), de l'application RUI à l'aide des informations de localisation.

9. Procédé selon la revendication 8, comprenant en outre l'étape de réception (820) d'une demande de suppression des informations d'état du CP (631).

10. Procédé selon la revendication 8, comprenant en outre l'étape de réception d'une demande de migration des informations d'état comprenant des informations de localisation indiquant où les informations d'état sont stockées.

11. Dispositif à point de commande, CP (631) pour gérer les informations d'état d'une application d'interface utilisateur distante (RUI),
le dispositif (631) étant conçu pour recevoir (805) une demande de migration pour migrer les informations d'état de l'application RUI d'un utilisateur, pour déterminer (806) une application RUI qui s'exécute actuellement sur un premier client (61), pour commander (807) le premier client (61) de faire une demande de stockage pour stocker les informations d'état de l'application RUI déterminée dans un serveur (65) fournissant l'application RUI, pour accéder au serveur (65) et vérifier les informations de localisation indiquant un chemin vers un emplacement où les informations d'état sont stockées, et pour envoyer (813) une demande de restauration incluant les informations de localisation pour demander à un second client (63) de restaurer les informations d'état.

12. Dispositif CP selon la revendication 11, le dispositif CP (631) étant conçu pour exécuter l'une quelconque des revendications 2 à 7.
